Europäisches Patentamt

European Patent Office

Office européen des brevets

(11) Publication number : **0 503 944 A2**

## EUROPEAN PATENT APPLICATION

(21) Application number : **92302134.9**

(22) Date of filing : **12.03.92**

(51) Int. Cl.⁵ : **G06F 9/44**

(30) Priority : **15.03.91 US 670125**

(43) Date of publication of application :
**16.09.92 Bulletin 92/38**

(84) Designated Contracting States :
**DE FR GB**

(72) Inventor : **Barto, Jere Lynn**
**1027 Stoll Court**
**Kingston, New York 12401 (US)**

(74) Representative : **Killgren, Neil Arthur**
**IBM United Kingdom Limited Intellectual**
**Property Department Hursley Park**
**Winchester Hampshire SO21 2JN (GB)**

(71) Applicant : **International Business Machines**
**Corporation**
**Old Orchard Road**
**Armonk, N.Y. 10504 (US)**

(54) **Command generator for a data processing system.**

(57)   A system for interactively building and executing a computer system command. The system provides an ability to create a displayable file from a textural description of the syntax of a command. The display uses graphic representation of the metasyntax of the particular command language. Graphic representation identifies all possible paths through the syntax to create a syntactically valid command. The system provides user interaction capability to select the required keyword options and to enter variable data resulting in the construction of a syntactically valid command. The invention allows the specification of arbitrarily complex syntax including unlimited nesting of repeating command groups. The use of a node structure allows the provision of field sensitive help directed to those nodes.

EP 0 503 944 A2

The present invention relates to the generation of commands for data processing systems.

The provision of effective means of communication between a user and the data processing machine has been an important issue in the introduction and acceptance of data processing machines. Effective communication between humans and machines is always difficult and requires either that the human learn to communicate as the machine desires or that the machine be programmed to understand some form of human communication.

Computer users typically need to request the computer to perform specific services. Several forms of communication have been provided for specifying requests. These include: menus from which the user can select a desired action; forms containing field names and spaces for the user to enter optional data for processing; pointing devices such as a mouse or trackball which are used to select an item appearing on a display device; prompts through which the system asks the user for necessary information; and command languages for constructing the entire request.

Computer command languages have the longest history and provide the most flexibility for the entry of user requests. A command language can typically express constructs that are difficult to display as a menu or panel entry item. A command language allows specification of a range of mutually exclusive options or of potentially repeating options. A language for a particular computer system is expressed in terms of a well specified and restricted grammar and vocabulary.

Command languages, however, are frequently difficult for a computer user to learn and remember. The restricted grammar and vocabulary require the user to enter the command according to the precise syntax required. If the user does not know the appropriate syntax he or she is unable to interact with the computer system. Previous solutions to the learning and remembering problem have been to provide users with manuals containing a description of the syntax of each command, to provide help screens which display the syntax and information about the commands, and to create panels or menus which solicit the required information from the user and construct a command for submission to the processor.

Each of these prior art solutions has disadvantages. The provision of paper manuals is of limited usefulness when the user is unable to locate a manual or unable to locate the desired command. In addition, the length of time required to locate a particular command in a manual increases as the size of the command set available increases. The provision of help screens speeds the access to the command information but requires that the user remember or note the syntax when returning to normal processing. This adds undesirable additional steps to the command generation process. Finally, panels or menus may be developed to solicit input for a command. Developing a panel for each command, however, is a time consuming task and may be difficult in the case of commands with complex options.

It is accordingly an object of the present invention to provide an improved command generator for a data processing system.

According to the invention there is provided a command generator for a data processing system comprising: storage means for storing command syntax information, said command syntax information including linked decision blocks each having one or more keywords or variables, said linked decision blocks forming a syntax expression; display generator means for transforming said command syntax information into a displayable form of said command for display on an interactive display device, said displayable form depicting the linked decision blocks of said command as a plurality of keywords and variables; user interaction means for selecting actions and entering variable information; and diagram traversing means for defining a path by recursively traversing said linked decision blocks, said traversal requiring selection of keywords and entry of variables to complete a syntactically correct command.

There is further provided a method for generating commands for a data processing system having a system processor, a display device, storage means, and user interaction means, said method comprising the steps of: storing a plurality of command syntax expressions in said storage means; initializing a command construction area; transforming said command syntax expressions into a syntax table having a plurality of syntax nodes each containing a node identifier, a node-type, a next node pointer, and zero, one or more children node identifiers; generating a displayable syntax diagram from said syntax table, said syntax diagram having a plurality of paths representing syntactically valid commands, said plurality of paths each having a plurality of defined fields, corresponding to said syntax nodes; displaying said syntax diagram on said display device; accepting an input from said user interaction means, said input indicating a desired action and a display position; and testing said desired action: if said action is a path selection, determining the path associated with said display position, redisplaying said syntax diagram with said path highlighted, appending syntax node type information to said command construction area; or if said action is variable data entry, verifying that said display position corresponds to a field in a selected path, and, if so, accepting said input as variable data associated with said field, and appending said variable data to said command construction area.

The system of the present invention uses documented keyword syntax statements developed for textual documentation. The same input can be used to generate either hardcopy documentation or online documentation for use with the present invention. A command constructed using the system will always be syntactically correct. The system provides field sensitive help allowing explanation of any field contained within the command. The present invention solves the technical problems of providing accessible and easily used assistance on the proper syntax for a command and the proper method to construct a command.

The present invention has the advantage of providing quickly accessible assistance without substantial development effort. There is no requirement to translate the syntax for a command to panels or menus as was done in prior art systems. Finally, a graphic representation provides an easy method for depicting command syntax, and for providing feedback on command options selected during command construction.

In order that the invention may be well understood, a preferred embodiment thereof will now be described with reference to the accompanying drawings, in which:

Fig. 1 is a sample diagram illustrating the graphic representation of command syntax.

Fig. 2 is a block diagram illustrating a computer system with which the present invention can be used.

Fig. 3 is a data flow diagram illustrating the flow of data through the present system.

Fig. 4 is an example of a display screen according to the present invention.

Fig. 5 is a flowchart describing the processing steps of the "build command" portion of the present invention.

The present invention is directed to effective means of communicating between computer users and data processing systems. A particular computer system typically has an associated command language syntax for entering and processing commands. The syntax can be expressed in the form of a metasyntax which is a formal representation of a language's syntax. The metasyntax for a computer language has historically been represented in one of two ways.

Metacharacters have been used to provide a text based description of a computer system. The first notation for representing this form of syntax was developed in 1959 by Backus and is called the Backus-Normal form or the Backus-Naur form (BNF). This description used a series of symbols and text to express the syntax for a programming language.

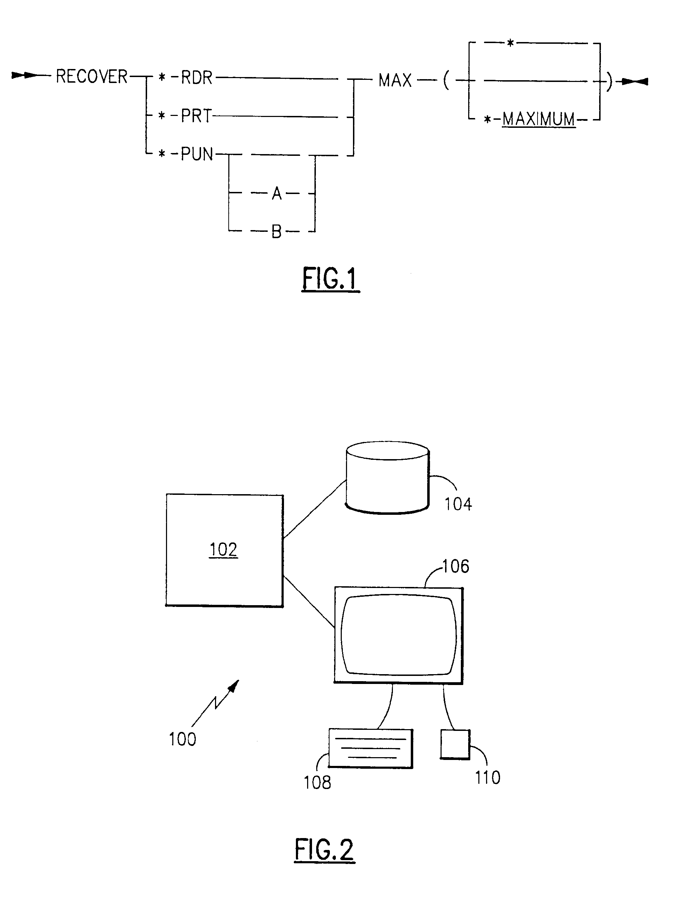

A second form of metasyntax is the use of graphic representation to express the language syntax. A graphic representation typically illustrates the components of the command and the interrelationships of those components. For example, multiple options for a command can be shown in a series of parallel lines indicating that one of these options must be selected. An example of a graphic representation of a command is shown in Fig. 1. Fig. 1 illustrates the command named "RECOVER", a series of command options (RDR PRT PUN) and the required entry of certain variable information (maximum).

The graphical representation requires that a syntactically valid command follow a single path through the graphic representation. The graphical representation typically provides information on the following constructs: keywords which must be entered in a particular form; syntactical variables for which a value must be supplied; mandatory choices which require that one of several items be selected; options where 0, 1 or more choices may be selected; default entries which will be assumed by the system if no further entry is made; and repetition which allows one or more of the above constructs to be repeated.

The graphic representation contains a beginning of command indicator and an end of command indicator. A syntactically valid command must follow a single line from beginning through the end.

The preferred embodiment of the present invention is operable on a variety of computer systems. A computer system for the present invention is shown generally at 100 in Fig. 2. A computer system has a central processing unit 102, permanent storage such as disk storage 104, and a terminal device 106 which has a keyboard 108 and may have a pointing device such as a mouse 110. The computer system of the present invention can be a mainframe type of a computer, such as the IBM ES/9000 system or can be a personal workstation such as the IBM PS/2 computer. Display station 106 must have the ability to display graphic images created using text or character graphics. Detailed pixel graphics are not required, though could be employed if available. The preferred embodiment of the present invention uses only text and character graphics to display graphic representation of the command. However, the concepts taught in the present invention could be expanded to any form of graphical display.

The interactive help and command generation system of the present invention requires a description of command syntax. This description is provided, in the preferred embodiment, as a series of markup language tags and associated variable information. Markup language tags provide for the identification of the separate elements of a command. An example of the command expressed using markup tags is shown in Table 1. The complete command description is contained between a ":syntax." and ":esyntax." set of tags. Keywords are shown following a ":kwd" keyword. Groupings are expressed following a ":group" tag and can be shown as choices, required, or optional etc. Defaults and delimeters can also be expressed using this language.

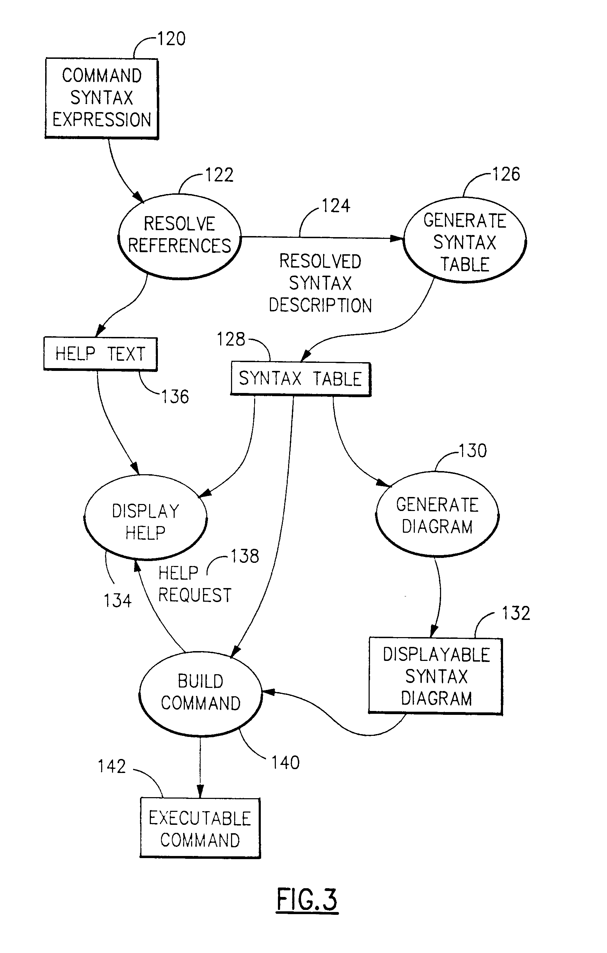

The present invention uses the command syntax expression to provide the information necessary for online help and interactive command construction. The processing steps of the present invention are shown generally in Fig. 3. The command syntax expression 120 may be in a form shown above, however, it will be understood that other means of marking and coding the command structure could be used. The first step 122 resolves references contained within the command syntax expression. If the command syntax expression is taken from other documentation there may be variable substitutions or other references that must be resolved. Step 122 creates a resolved syntax description 124 which is passed to step 126 to generate the syntax table. The syntax table 128 is used to generate a command syntax diagram at step 130 creating diagram 132 and is also used when displaying the help file in step 134 which uses help text 136, and by the build command step 140 that creates in the executable command 142. The steps of resolving references 122, generate syntax table 126 and generate diagram 130 need be performed only once for each command. Once these steps have been processed the stored output can be used by the display help 134 and build command 140 steps by a series of users by simply copying these output files to other systems. In the preferred embodiment, a system embodying only display help and build command steps is provided to each user. Only the system developers have access to the other portions of the system.

Each of the above processing steps will be discussed in greater detail.

The resolve references step 122 analyzes the command syntax expression 120 to search for unresolved references. Unresolved references may arise where the command syntax is part of a larger set of documentation requiring variable substitutions. The generation of the syntax table and diagram information requires that all variable information be resolved prior to generation. Command syntax expression 120 is expressed as a series of markup tags and textual matter as shown and described with respect to Table 1. These tags can be arbitrarily selected or can be part of a product such as the IBM Bookmaster publishing product. The resolve references step processes the command syntax expression to resolve any references while ignoring processing of the syntax tags. The resulting resolved syntax description 124 contains markup tags and fully resolved textural matter.

<u>TABLE 1</u>

```
:syntax.
:kwd.RECOVER
:group choice req.
 :kwd.RDR
 :kwd.PRT
```

```
:group seq req.
 :kwd:PUN
 :group choice opt.
  :kwd.A
  :kwd.B
 :egroup.
 :egroup
:egroup.
:kwd.MAX
:delim.(
:group choice opt.
 :kwd def.*
 :var.maximum
:group.
:delim.)
:esyntax.
```

The generate syntax table step 126 uses the resolved syntax description 124 to create a syntax table expressing the relationships that exist in the particular command. The syntax table is expressed in terms of nodes. The resulting syntax table could be depicted as a network of nodes with interconnecting linkages. Each node in the syntax table contains an identifier, a specification of node type, a pointer to the next node in the linked network, and a pointer to each subsidiary or child node that depends upon the node. Options associated with the node are expressed as child nodes.

The present invention recognizes three node types. A decision block node describes a point where the user must select between mutually exclusive options. The options are identified as child nodes and the parent decision block node contains a pointer to each child node. A particular child node can, in turn, be a decision block or any other node type. The second node type is an option start node. The option start identifies the beginning of an option and helps define the path of options. The final node type is a text node. Text nodes contain the string from the markup tag and will be displayed in the diagram.

The table comprises a linked list of nodes and child nodes. A next node value of -1 indicates the end of a chain and no further subsidiary nodes exist. Each option can be viewed as a chain of nodes ending with an end of chain indicator. An example of a syntax table is shown as Table 2 below.

## Table 2

| NodeId | Type | Next Node | Children |
|---|---|---|---|
| 1 | Option Start | 2 | |
| 2 | Text - RECOVER | 3 | |
| 3 | Decision Block | 17 | 4, 6, 8 |
| 4 | Option Start | 5 | |
| 5 | Text - RDR | -1 | |
| 6 | Option Start | 7 | |
| 7 | Text - PRT | -1 | |
| 8 | Option Start | 9 | |
| 9 | Text - PUN | 10 | |
| 10 | Decision Block | -1 | 11, 13, 15 |
| 11 | Option Start | 12 | |
| 12 | Text - "" | -1 | |
| 13 | Option Start | 14 | |
| 14 | Text - A | -1 | |
| 15 | Option Start | 16 | |
| 16 | Text - B | -1 | |
| 17 | Text - MAX | 18 | |
| 18 | Text - ( | 19 | |
| 19 | Decision Block | 26 | 20, 22, 24 |
| 20 | Option Start | 21 | |
| 21 | Text - * | -1 | |
| 22 | Option Start | 23 | |
| 23 | Text - "" | -1 | |
| 24 | Option Start | 25 | |
| 25 | Text - maximum | -1 | |
| 26 | Text - ) | -1 | |

The generate diagram step creates a displayable syntax diagram from the information contained in the syntax table. The diagram defines a series of paths through the command. A path is a set of nodes beginning with an option start node and ending with the first decision block encountered in the chain associated with that option start. The diagram generator expresses the syntax graphically extending horizontally across the display surface. The generated diagram is scrollable both horizontally and vertically and is not restricted to the size of a particular display device. The generate diagram step 130 traverses syntax table 128 creating a displayable object for each path of the command. Traversal of the network of the syntax table is accomplished by a program such as that shown in Table 3. Each defined node type has a specified graphical relationship that is used to create the final diagram.

6

Table 3

```
Traverse_Chain:

node = argument

Do while(node !=end-of-chain)

    /*                                    */

    /* Process the current node here */

    /*                                    */

    /* If this is a decision block, process each child

                                    (option)     */

    For i = 1 to num_children

        Call Traverse_Chain child.i

        End

    /* Advance to the next node, same chain * /

    node = next_node

    End

/* Return when an end-of-chain is found */

Return
```

The displayable graphic representation of the command syntax is designed to be navigated by the user on the screen. This requires an ability to move from parameter to parameter and also, according to the present invention, to indicate the parameter selections already made. This capability is provided by defining each of the nodes as a separate field on the screen. Field definition allows rapid cursor positioning, highlighting of selected fields, and the provision of field sensitive help requests. Each field on the screen is identified by node ID, and screen position, i.e. row, and column beginning and ending point. This definition allows an evaluation of cursor position to be translated into node ID for field sensitive help. Attributes are assigned to each field and provide for highlighting, or other emphasis by means of color, reverse video, or similar technique. Depending upon the target display type, a single field attribute may be assigned, or, for other displays, character attributes may be assigned to each character in the field. The resulting displayable diagram contains the screen image with attribute fields and separate field definitions.

The ability to display help 134 is provided based upon the syntax table 128 and specified help text 136. Help text is generated for each field or node of the display. This text is used to explain the contents of the field to allow proper selection or entry by the computer user. A help request 138 from the build command step 140 initiates the help display. Help request will contain the node ID of the node on which the user is seeking help. The node ID is matched to the syntax table and in turn to the help text 136 to display to the user the appropriate help messages.

The step build command 140 displays the displayable syntax diagram 132 and interacts with the user to build an executable command 142. This step handles the selection, data entry, and screen scrolling necessary to interactively work with the user to develop the executable command. Once constructed executable command 142 can be initiated in the processor or can be stored in a file of other executable commands for later processing.

Build command step 140 is invoked by providing the command name, a library identifier that identifies the set of commands of interest or by providing a library name and request to select a command from the menu or list of the available commands. A command as discussed herein can be an operating system command, a programming statement, or a subroutine call.

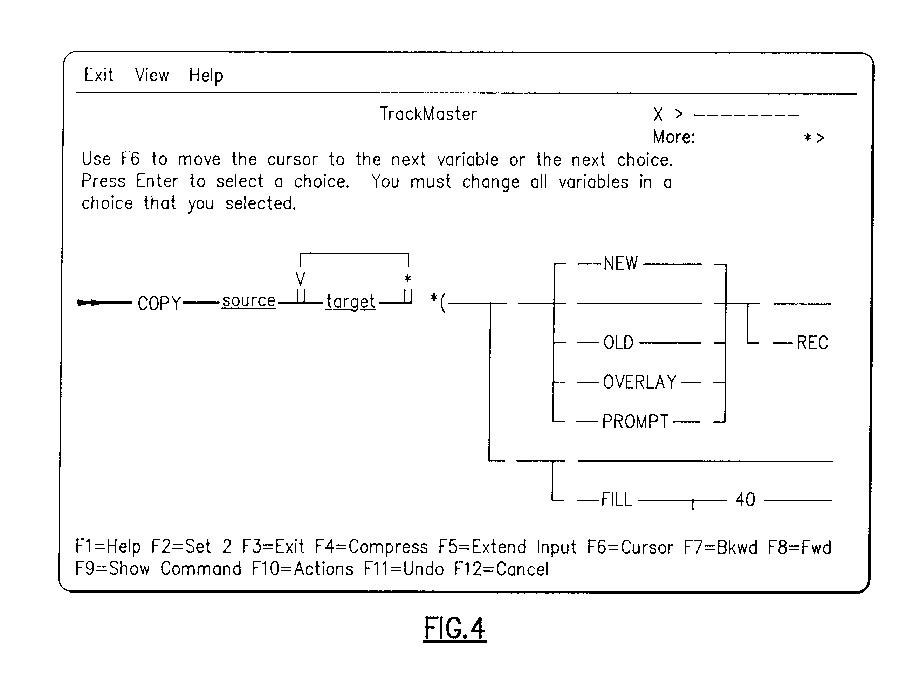

The interactive command generator according to the present invention operates from a main panel containing a portion of the displayable diagram and a series of action keys and function keys. See Fig. 4 for an example of a main panel according to the present invention.

The main panel displays a syntax diagram for the requested command. A "thermometer" display is provided showing the percentage of the command specified by the user. (e.g. "XXX>------" indicates that 40% of the command has been specified.) The command can be scrolled horizontally or vertically to display the portions not currently seen.

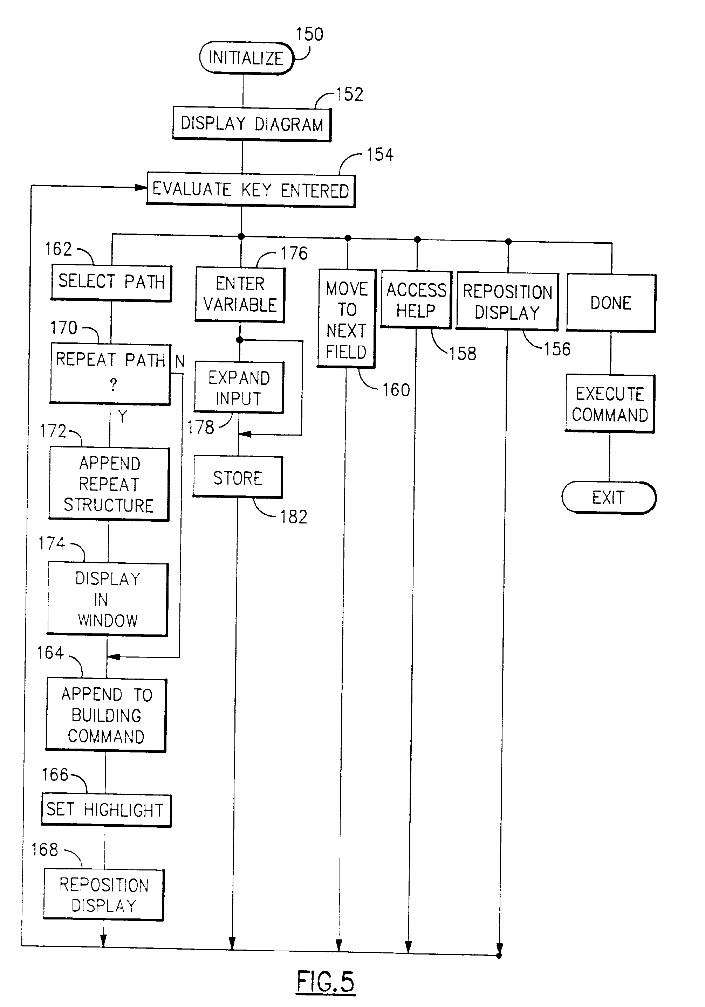

Function keys are provided to select the action to be taken. These keys include a key for activating the display help step 134, a key to tab or jump to the next field for processing, a key to compress or expand the diagram depending on the complexity of the syntax, a key to select or deselect a tag on which the cursor rests, and an ability to enter variable data on the screen. The build command step 140 operates generally in accordance with Fig. 5. The command is first initialized (step 150) establishing the necessary memory areas for storing the command as it is being constructed and by accessing displayable diagram in field positions. Next the displayable diagram is displayed 152. Upon entry of a function key or other key by the user, the system evaluates the key to determine the appropriate action to take 154.

Scrolling keys are provided to reposition the display by horizontal and vertical scrolling 156. The key is provided to allow access to the online help 158. A cursor key 160 is also provided to move from field to field on the display. The screen is divided into a series of fields represented by selectable tokens. The cursor function 160 moves the cursor to the first unentered input field on the last selected path, or, if there are no selected paths, cursor function 160 cycles the cursor through the active path selection points. A move to the next field may cause automatic scrolling as necessary to display a sufficient portion of the selected diagram path. A selection key 162 is provided for selecting a particular path of nodes. Upon selection of a node, the key words from the node are appended to the command being built in memory 164. Next the attributes of the nodes in the path are reset to highlight the selected path and to de-emphasize any alternate paths not selected. Finally the display is repositioned 168 ready for entry or selection of the next node. If the selected path represents a repeat path 170 additional processing is required. A copy of the repeat structure is appended to the existing structure 172 at the point of selection of the repeat. The repeat portion of the structure is displayed in a window 174 and can be acted on as is the main diagram display. The system of the present invention supports unlimited nesting of repeat groups with the above steps repeating for each additional repeat group. Once processing of the repeat group has been completed the display is repositioned and the system queries for the next keystroke.

The fields which require entry of variable data are shown as underlined upon the main display screen. All variable fields are initially protected against entry. The selection of a path containing a variable causes the variable field to be highlighted and unprotected allowing variable data to be typed directly into those fields 176. If the data to be entered into the field exceeds the length of the displayed variable field, an action key can be depressed to expand the input area to allow entry of longer variables 178. The entered data is appended to the command being built 182.

Finally, a selection item has been provided to complete the interaction. Upon completion the command built can be executed directly or can be stored in the program stack or a data file for later processing. It will be understood that the invention described above is not intended to be limited to particular implementation technologies, rather, the above illustration is by way of example only. Those skilled in the art will recognize that many alternate implementations can be made of the underlying ideas. The present invention is intended to be limited only by the appended claims.

## Claims

1. A command generator for a data processing system comprising:

   storage means for storing command syntax information, said command syntax information including linked decision blocks each having one or more keywords or variables, said linked decision blocks forming a syntax expression;

   display generator means for transforming said command syntax information into a displayable form of said command for display on an interactive display device, said displayable form depicting the linked decision blocks of said command as a plurality of keywords and variables;

   user interaction means for selecting actions and entering variable information; and diagram traversing means for defining a path by recursively traversing said linked decision blocks, said traversal requiring selection of keywords and entry of variables to complete a syntactically correct command.

2. A generator as claimed in Claim 1, wherein said diagram traversing means comprises:

   user input analysis means for analyzing said keyword selections and said variable information entered by said user interaction means to determine actions selected and display position;

   search means for determining the decision block associated with said action and said display selection position; and

means for storing the keyword or variable information from said decision block in said storage means appended to keyword or variable information previously stored by said means for storing.

3. A method for generating commands for a data processing system having a system processor, a display device, storage means, and user interaction means, said method comprising the steps of:

storing a plurality of command syntax expressions in said storage means;

initializing a command construction area;

transforming said command syntax expressions into a syntax table having a plurality of syntax nodes each containing a node identifier, a node-type, a next node pointer, and zero, one or more children node identifiers;

generating a displayable syntax diagram from said syntax table, said syntax diagram having a plurality of paths representing syntactically valid commands, said plurality of paths each having a plurality of defined fields, corresponding to said syntax nodes;

displaying said syntax diagram on said display device;

accepting an input from said user interaction means, said input indicating a desired action and a display position; and

testing said desired action:

if said action is a path selection, determining the path associated with said display position, redisplaying said syntax diagram with said path highlighted, appending syntax node type information to said command construction area; or

if said action is variable data entry, verifying that said display position corresponds to a field in a selected path, and, if so, accepting said input as variable data associated with said field, and appending said variable data to said command construction area.

4. The method of Claim 3, further comprising the steps of:

if said action is a repeat action, appending to said selected path a copy of a portion of the path associated with said display position;

displaying said path portion copy; and

repeating the steps of accepting input, testing, and subsequent steps for said path portion copy.

5. The method of Claim 3, further comprising the steps of:

storing in said storage means help information further explaining the contents and desired actions associated with each of said fields; and

if said action is a help action, accessing help information associated with said display position in said storage means, and displaying said help information.

6. The method of Claim 3, further comprising the step of executing the command contained in said command construction area.

7. The method of Claim 3, wherein said plurality of command syntax expressions are textual descriptions delimited by keyword tags.

FIG.1

FIG.2

FIG.3

Exit   View   Help
_____

                          TrackMaster              X > — — — — — —
                                                  More:          * >

Use F6 to move the cursor to the next variable or the next choice.
Press Enter to select a choice.  You must change all variables in a
choice that you selected.


                                           ┌—NEW—————┐
                          ┌———┐
                          V      *          │
──►——COPY——source—┴┴—target—┴┴  *(———┤     │—————————│———————
                                           │                    └—REC
                                           │—OLD————│
                                           │—OVERLAY—│
                                           └—PROMPT——┘

                                           └——FILL ——┬— 40 ————


F1=Help F2=Set 2 F3=Exit F4=Compress F5=Extend Input F6=Cursor F7=Bkwd F8=Fwd
F9=Show Command F10=Actions F11=Undo F12=Cancel


## FIG.4

FIG.5